Europäisches Patentamt

European Patent Office

Office européen des brevets

(19)

(11) EP 0 865 010 B1

(12) **FASCICULE DE BREVET EUROPEEN**

(45) Date de publication et mention
de la délivrance du brevet:
**05.07.2006 Bulletin 2006/27**

(51) Int Cl.:
*G07F 19/00* (2006.01)    *G07F 7/08* (2006.01)

(21) Numéro de dépôt: **98400571.0**

(22) Date de dépôt: **11.03.1998**

(54) **Systéme de paiement électronique sécurisé et procédé de mise en oeuvre**

Gesichertes elektronisches Bezahlungssystem und Verfahren zur Durchführung des Systems

Secure electronic payment system and method to implement it

(84) Etats contractants désignés:
**DE GB IT**

(30) Priorité: **13.03.1997 FR 9703007**

(43) Date de publication de la demande:
**16.09.1998 Bulletin 1998/38**

(73) Titulaires:
 • **FRANCE TELECOM**
 **75015 Paris (FR)**
 • **LA POSTE**
 **F-92777 Boulogne Billancourt (FR)**

(72) Inventeurs:
 • **De Solages, Aymeric**
 **14000 Caen (FR)**
 • **Traore, Jacques**
 **61000 Flers (FR)**
 • **Guerin, Didier**
 **14000 Caen (FR)**

(74) Mandataire: **Poulin, Gérard et al**
 **BREVALEX**
 **3, rue du Docteur Lancereaux**
 **75008 Paris (FR)**

(56) Documents cités:
 **EP-A- 0 693 742       EP-A- 0 731 580**
 **EP-A- 0 747 867       WO-A-96/36026**
 **WO-A-96/41316        WO-A-97/02539**
 **WO-A-97/03423**

EP 0 865 010 B1

## Description

### Domaine technique

La présente invention a pour objet un système de paiement électronique sécurisé et un procédé de mise en oeuvre de ce système. L'invention s'insère dans le cadre du paiement en ligne de biens ou de services, dans le contexte des réseaux ouverts, où les biens et services sont offerts par de multiples prestataires appelés par la suite commerçants. Dans ce contexte, le client, appelé utilisateur par la suite, n'a pas nécessairement de lien privilégié avec le commerçant, et le montant de la transaction peut être de faible, voire de très faible valeur.

L'objet de l'invention est un système générique de paiement électronique, analogue à celui de la monnaie fiduciaire, permettant notamment -et à faible coût- le paiement des montants de faible valeur, et dans lequel l'utilisateur garde néanmoins le contrôle de ses dépenses.

### Etat de la technique antérieure

Dans certains systèmes de paiement existants, utilisables pour de petites sommes, les dépenses de l'utilisateur sont imputées, sans engagement signé de ce dernier, sur un compte distant. Cette solution prive l'utilisateur de tout moyen de recours en cas d'imputation erronée ou frauduleuse sur son compte. La solution consistant à prévoir l'envoi par l'utilisateur d'un engagement signé lors de chaque dépense, serait inadaptée au paiement de petits montants, pour des raisons de coût.

Le compte distant peut être préalimenté par l'utilisateur. Si de tels comptes sont constitués chez les commerçants, la liquidité de l'argent disponible diminue, ce qui est un frein aux échanges dont pâtissent aussi bien les utilisateurs, qui voient leur pouvoir d'achat dispersé, que les commerçants, qui voient leurs ventes diminuer. Si, en revanche, un compte distant préalimenté est tenu par un tiers, autre qu'une banque, cela risque de contrevenir à la réglementation en vigueur.

Le compte distant peut ne pas être préalimenté, et donc donner lieu à une facturation (par exemple une facture téléphonique). Ce cas particulier d'imputation sur compte distant permet le paiement de petits montants, mais n'offre pas de garantie de paiement au commerçant. Ce système entraîne un délai entre la fourniture de la prestation et le paiement ; il nécessite en outre la gestion des retards de paiement éventuels et la prise en compte du risque d'insolvabilité de l'utilisateur.

On connaît d'autres systèmes fondés sur l'utilisation de pièces électroniques simulant la monnaie fiduciaire, qui s'affranchissent des défauts mentionnés ci-dessus en permettant le contrôle par l'utilisateur de ses dépenses. Dans ces systèmes, l'utilisateur conserve ses pièces auprès de lui et ne les distribue qu'à hauteur du montant à payer. Cependant, l'utilisation de pièces (électroniques ou non) peut se révéler peu commode à cause du problème de l'appoint. Ce problème est simplifié si le commerçant peut rendre la monnaie, mais cette possibilité reste difficile à offrir dans le cas de la monnaie électronique.

Une façon simple de résoudre le problème de l'appoint consiste à utiliser des pièces d'un montant unique -qui correspond alors à la "granularité" de la monnaie électronique-, ou plus généralement à utiliser des valeurs faciales faibles. Mais on est alors confronté au problème du coût de cette pièce, réparti en coût de fabrication et coût de vérification de la pièce, d'une part, (liés au temps de calcul), de transmission et de conservation de cette même pièce, d'autre part, (liés à l'espace qu'elle occupe) rapporté à sa valeur faciale, qui est faible.

En outre, dans les systèmes existants à pièces électroniques, la résolution des contraintes de contrôle du rejeu et du vol par interception, inhérents à la notion de pièce électronique, entraîne un surcoût non négligeable.

Le système de paiement dit "Millicent" résout le problème de l'appoint en permettant au commerçant de rendre la monnaie lors de chaque transaction. Ce système est décrit dans l'article de Mark S. MANASSE, intitulé : "Design Considerations for Lightweight Payment Protocols", publié dans "First USENIX Workshop on Electronic Commerce", New York, Juillet 1995. Selon ce système, le commerçant fabrique lui-même, à l'aide de clefs secrètes connues de lui seul, les pièces électroniques qui serviront à le payer. Ces pièces sont vendues ensuite à un courtier. Pour effectuer des transactions chez un commerçant, l'utilisateur doit se procurer préalablement auprès de ce courtier une pièce produite par le commerçant. Ce dernier contrôle le rejeu et rend la monnaie, en donnant à l'utilisateur une nouvelle pièce d'un montant diminué de l'achat qu'il vient de faire. Dans un tel système, l'utilisateur n'a aucun moyen de contrôle de la validité de ces pièces, que ce soit lors de l'achat auprès du courtier, ou lorsqu'on lui rend la monnaie. En outre, ce système n'est pas adapté à une application où l'utilisateur ne connaît pas par avance l'ensemble des commerçants qu'il va fréquenter (cas typique de la navigation sur internet).

On connaît encore d'autres systèmes fondés sur ce que l'on appelle le chèque électronique. Le chèque électronique usuel est un engagement signé de l'utilisateur, qui est présenté à un tiers pour remboursement. Il est inadapté au paiement de petits montants en raison de son coût en temps de calcul (production et vérification) et en espace occupé. En outre, la garantie de paiement au commerçant n'est pas absolue (il s'agit en effet d'un postpaiement).

Un système dit "PayWord" a été décrit par R. L. RIVEST et A. SHAMIR dans "PayWord and MicroMint : Two Simple Micropayment Schemes", publié dans Technical Report, MIT LCS, novembre 1995. Ce système permet l'utilisation d'un même chèque pour plusieurs paiements auprès d'un même commerçant, diminuant ainsi le coût unitaire des transactions. Toutefois, ce système ne garantit pas davantage le paiement au commerçant, à moins d'être complété par un système d'autorisation. En outre, ce système devient coûteux lorsque l'utilisateur est amené à consulter de nombreux commerçants.

Un autre système connu utilise ce qu'il est convenu d'appeler le "porte-monnaie électronique". Cette solution est valable pour les petits paiements. Le porte-monnaie peut contenir des pièces électroniques ou gérer un compteur. Le porte-monnaie à pièces électroniques comporte les inconvénients évoqués ci-dessus, liés à la notion de pièce. Le porte-monnaie électronique à compteur n'est adapté au paiement de petits montants que si le système ne conserve pas la trace de chaque paiement, mais agrège les montants reçus côté commerçant. Cette perte d'information impose l'utilisation de modules de sécurité côté utilisateur et côté commerçant, afin d'empêcher la création de fausse monnaie. La sécurité globale du système repose alors sur la sécurité physique des modules de sécurité, ce que redoutent les banques.

Le document EP-A-0 693 742 décrit un système de paiement comprenant des supports détenus par des clients, des supports détenus par des commerçants et un support intermédiaire. Le client délivre au commerçant un ticket qu'il a retiré précédemment auprès de l'intermédiaire. Le document WO 97/02539 décrit un autre système de paiement dans lequel le montant de la transaction transite par un serveur. Dans ces techniques, il n'y a pas de double paiement, l'un du client à l'intermédiaire, l'autre de l'intermédiaire au commerçant.

**Exposé de l'invention**

L'invention a justement pour objet de remédier à ces inconvénients. A cette fin, l'invention propose un système de paiement qui conserve la propriété essentielle des pièces électroniques, à savoir le contrôle par l'utilisateur de ses dépenses, tout en évitant de manière simple les deux défauts d'un tel système à savoir la possibilité du rejeu des pièces et de leur interception et vol en ligne. De plus, selon l'invention, les pièces sont remplacées par des jetons dont le coût unitaire de fabrication et d'utilisation est notablement plus faible.

Le principe adopté dans le système de paiement de l'invention est celui du double paiement : l'utilisateur paie un intermédiaire, appelé dans la suite le "médiateur", qui reverse tout ou partie de la somme perçue au commerçant. Le système possède donc naturellement les propriétés découlant de cette structure :

- le commerçant peut déléguer la gestion des utilisateurs au médiateur,
- le médiateur peut jouer le rôle d'interlocuteur unique pour tous,
- il existe un anonymat relatif de l'utilisateur vis-à-vis du commerçant.

De façon pratique, et contrairement au cas du système "Millicent" évoqué plus haut, l'utilisateur peut engager une série de sessions de paiements de petits montants avec des commerçants différents, sans être ralenti par l'inertie du système de paiement.

En résumé, le système de paiement selon l'invention permet le contrôle par l'utilisateur de ses dépenses et facilite grandement le contrôle du rejeu des jetons de paiement utilisés. Leur interception en ligne est également sans conséquence sous réserve que l'origine de la commande soit authentifiée. Ces jetons sont de coût unitaire très faible devant celui de la pièce électronique, et autorisent donc l'utilisation de valeurs faciales faibles, simplifiant par là même le problème de l'appoint. Le système proposé par l'invention est une solution rentable pour le paiement de petits montants, encore appelé "micropaiement".

Pour décrire l'invention de manière plus précise, on utilisera certaines expressions ou termes dont les définitions sont les suivantes :

**Garantie de paiement :**

La garantie de paiement est l'information cédée en paiement par le payeur au payé au moment de la transaction. Dans le cas d'un système de prépaiement, elles sont encore appelées "garanties de prépaiement". Dans le cas d'un système de postpaiement, elles sont appelées "garanties de postpaiement".

**Elément de garantie de paiement :**

Un élément de garantie de paiement est une partie d'une garantie de paiement. Ainsi, l'élément de garantie de paiement peut ne pas constituer une garantie de paiement à lui seul, et en particulier peut ne pas comporter de signature.

Une telle notion permet de modifier le contenu d'une garantie de paiement par l'adjonction d'un élément de garantie de paiement, et donc d'agréger plusieurs garanties de paiement en une seule. C'est sur ce principe que fonctionne le paiement de petits montants dans la présente invention.

**Système de prépaiement :**

On appelle système de prépaiement tout système de paiement dans lequel le paiement est garanti par un tiers, appelé émetteur par la suite, autre que le payeur. Autrement dit, la garantie de prépaiement représente un engagement du tiers.

Par exemple, un système de paiement fondé sur l'utilisation de pièces électroniques est un système de prépaiement. Le paiement est garanti par l'émetteur de monnaie.

**Système de postpaiement :**

On appelle système de postpaiement tout système de paiement dans lequel le paiement est garanti par le payeur. Autrement dit, la garantie postpaiement représente un engagement du payeur.

Par exemple, la garantie de postpaiement peut prendre la forme :

- d'un engagement du payeur à payer la somme convenue avant une certaine date, à la personne désignée sur l'engagement,
- d'un ordre du payeur à un tiers de payer la somme convenue : soit sur présentation de l'engagement, soit à la personne désignée sur l'ordre.

Lorsque la présentation de l'engagement n'est pas requise, le paiement effectif peut se faire sur l'initiative du payeur, la garantie de paiement n'étant exhibée qu'en cas de conflit.

Ces définitions ayant été données, l'organisation du système de l'invention est alors la suivante.

Le système générique de l'invention fait intervenir une entité intermédiaire, appelée médiateur. Le médiateur intervient lors de chaque transaction, en effectuant une substitution de preuve : en échange d'un ou de plusieurs éléments de garantie de paiement obtenus de l'utilisateur, il donne un ou plusieurs éléments de garantie de paiement au commerçant.

Le système de l'invention peut être décomposé en deux sous-systèmes coopérant pour mener à bien le paiement du commerçant par l'utilisateur : un premier sous-système de paiement agissant de l'utilisateur au médiateur, et un second sous-système de paiement agissant du médiateur au commerçant.

Un tel système de paiement peut être considéré comme un système porte-monnaie dans lequel le contrôle du flux monétique (égalité du flux d'argent électronique reçu des utilisateurs et du flux d'argent électronique envoyé aux commerçants) est sous la responsabilité du médiateur, au lieu de reposer sur la sécurité physique des modules de sécurité des utilisateurs et des commerçants.

Le médiateur sert d'intermédiaire lors de la transaction et peut donc protéger l'anonymat de l'utilisateur vis-à-vis du commerçant, en ne transmettant pas l'identité de l'utilisateur au commerçant. Le médiateur est alors l'interlocuteur unique du commerçant. La garantie de paiement obtenue par le commerçant repose alors sur la solvabilité d'une entité digne de confiance, et non plus sur celle de l'utilisateur. Cette entité peut être :

- soit le médiateur, lorsque le sous-système de paiement du médiateur au commerçant est un système de postpaiement,
- soit un tiers de confiance, lorsque le sous-système de paiement du médiateur au commerçant est un système de prépaiement.

Lorsqu'en outre le sous-système de paiement de l'utilisateur au médiateur est un système de prépaiement :

- la garantie de paiement obtenue par le médiateur repose sur la solvabilité d'un tiers de confiance, et non pas sur celle de l'utilisateur,
- l'utilisateur connaît à l'avance le destinataire de la garantie de prépaiement -à savoir le médiateur- et peut donc la faire établir au nom de ce dernier, pour en éviter le vol par un tiers,
- le contrôle par le médiateur, du rejeu par l'utilisateur, d'un élément de garantie de prépaiement est plus rapide et moins coûteux car :

  - d'une part, le contrôle du rejeu de l'utilisateur peut être effectué localement par le médiateur, sans en référer à l'émetteur, car il ne nécessite une recherche que parmi les garanties de prépaiement qui lui sont destinées,

- et, d'autre part, il ne nécessite -et ceci est lié au fait précédent- qu'une recherche restreinte : non pas parmi l'ensemble des garanties de prépaiement émises par l'émetteur, mais seulement parmi celles qui sont destinées au médiateur, ou mieux, si l'élément de garantie de prépaiement mentionne également l'identifiant de l'utilisateur, seulement parmi les garanties de prépaiement destinées au médiateur et émises par ce seul utilisateur ;

- enfin, le médiateur peut remettre les garanties de prépaiement qu'il a reçues des utilisateurs à l'émetteur, et, simultanément, remplir ses engagements à payer que constituent les garanties de postpaiement qu'il a données aux commerçants, le commerçant étant alors libéré de toute gestion financière.

Les sous-systèmes de prépaiement et de postpaiement vont d'abord être décrits (paragraphes A et B), puis les sessions multiples (paragraphe C) et la livraison et le courtage (paragraphe D).

## A) LE SOUS-SYSTEME DE PREPAIEMENT

Un ensemble de solutions possibles pour un sous-système de prépaiement entre l'utilisateur et le médiateur va d'abord être décrit. Ces solutions peuvent convenir plus généralement comme système de prépaiement dédié au paiement à une entité unique.

### A1) Garantie de prépaiement

Dans les solutions qui vont être décrites, le médiateur reçoit, en paiement, une garantie de prépaiement éclatée en deux sortes d'éléments de garantie de prépaiement : la signature de l'émetteur (unique), et les jetons de paiement.
Les jetons de paiement d'une même garantie de prépaiement sont regroupés en chaînes. Chaque chaîne $C_i$ est repérée par un indice i compris entre 1 et M. Une chaîne $C_i$ comprend $N_1$ jetons. On note ces jetons $w_{ij}$ avec l'indice j compris entre 1 et Ni. Le nombre Ni représente la longueur de la chaîne d'indice i. Chaque chaîne possède un jeton de tête $t_i$ qui est le jeton de rang $N_i$, soit $w_i,N_i$. Les jetons sont définis par une relation de récurrence qui permet de trouver les jetons de proche en proche par la relation $w_{i,j}=h(w_{1,j+1})$ où h est une fonction à sens unique publique. Pour le premier jeton $w_{i,1}$, on a $r_i=h(w_{i,1})$ où $r_i$ représente la racine de la chaîne.
A chaque jeton $w_{ij}$ est associé une valeur faciale notée $vf(w_{ij})$, qui peut dépendre à la fois de la chaîne dans laquelle il se trouve (donc de l'indice i) et de son rang dans cette chaîne (donc de l'indice j). La valeur faciale de chaque jeton doit être connue de tous. Elle peut faire l'objet de publications par l'émetteur, et/ou figurer dans la pièce. Dans le cas le plus simple, tous les jetons ont la même valeur faciale à l'intérieur d'une même chaîne, ou ont tous la même valeur faciale.
Quant à la signature de l'émetteur qui complète la garantie de paiement, elle peut contenir l'identifiant $id_M$ du médiateur, au paiement duquel la garantie de prépaiement est dédiée, si, par exemple, l'émetteur met en concurrence plusieurs médiateurs.
Lorsque l'utilisateur n'est pas anonyme vis-à-vis du médiateur, la signature de l'émetteur peut également contenir l'identifiant $id_U$ de l'utilisateur. Sinon, toute autre information permettant au médiateur de classer ou de retrouver la ou les signatures de l'émetteur peut être insérée dans la signature (numéro ordinal attribué aux signatures par l'émetteur, pseudonyme de l'utilisateur, ...).
La signature de l'émetteur doit contenir les racines $r_i$ de chaque chaîne. Elle doit également contenir la longueur Ni de la chaîne d'indice i, sauf si l'émetteur participe au choix de $t_i$ de façon telle qu'il soit certain que l'utilisateur ne peut connaître l'antécédent de $t_i$ par h. Ces chaînes de jetons de paiement sont ainsi validées par l'émetteur, avec leur date d'expiration $d_{exp.ut.}$. Cette date est la date au-delà de laquelle l'utilisateur ne peut plus l'utiliser en paiement. La signature de l'émetteur, notée SE, est donc une fonction de la forme :

$$\mathtt{SE((id_M), ,(id_U),(Ni),r_i,d_{exp.ut.}).}$$

Le médiateur dispose d'un délai supplémentaire par rapport à la date d'expiration de la chaîne pour effectuer le dépôt. Sa date d'expiration $d_{exp.méd.}$ est donnée par :

$$\mathtt{d_{exp.méd.}=d_{exp.ut.}+\Delta_{dépôt}.}$$

**A2) Comparaison avec la pièce électronique**

La garantie de prépaiement complète est donc constituée d'une signature de l'émetteur, et d'une ou de plusieurs chaînes de jetons de paiement. Contrairement au cas de la pièce électronique, la signature de l'émetteur ne suffit pas à lui conférer une valeur. Elle ne vaut lors du dépôt à l'émetteur, qu'accompagnée, pour chaque chaîne qu'elle contient, du dernier jeton reçu du payeur.

La garantie de prépaiement décrite donne lieu aux trois opérations de base traditionnellement attachées à la notion de pièce électronique : le retrait, le paiement et le dépôt. Cependant, ni les jetons de paiement, pris individuellement, ni la signature de l'émetteur, n'empruntent en général le circuit obligé de la pièce électronique traditionnelle (de l'émetteur vers le payeur lors du retrait, puis du payeur vers le payé lors du paiement, et enfin du payé vers l'émetteur lors du dépôt).

**A3) Protection des données de l'utilisateur**

Pour assurer une validité des calculs cryptographiques (vérification de signature, calcul de signature, authentification) qu'il effectue, l'utilisateur doit protéger l'accès à ses clefs secrètes, et s'assurer de l'authenticité et/ou de l'intégrité du logiciel utilisé. Il peut, pour cela, utiliser toutes les techniques disponibles de contrôle d'accès physique et/ou logique. Une solution avec carte à puce peut être retenue.

Outre ces données, l'utilisateur doit également protéger l'accès à ses jetons de paiement. L'utilisateur n'a pas besoin de conserver l'ensemble des jetons non utilisés, car $w_{i,j+1}$ se déduit de $w_{i,j}$ par l'application de la fonction h. Selon la place dont il dispose, et la rapidité de son unité de calcul, il peut choisir un compromis. Par exemple :

- il peut conserver uniquement la tête $t_i$ de chaque chaîne (c'est d'ailleurs nécessaire), car elle permet de recalculer la chaîne entière de proche en proche, par la relation $w_{i,j}=h(w_{i,j+1})$ ;
- il peut précalculer et/ou conserver des jetons intermédiaires (par exemple 1 sur 10), pour accélérer la phase de paiement ;
- il peut conserver la totalité des jetons, si bien que plus aucun calcul n'est nécessaire.

**A4) Intérêt du sous-système de prépaiement**

Le sous-système de prépaiement qui vient d'être décrit présente plusieurs avantages :

**a) coût de mise en oeuvre :**

La garantie de prépaiement peut être utilisée pour plusieurs paiements à une même entité, une fraction de sa valeur totale étant cédée lors de chaque paiement. Les paiements effectués à l'aide de la même garantie de prépaiement à l'intérieur de sa période de validité ne se font pas nécessairement au cours du même dialogue. Dans le cas de l'invention, la garantie de prépaiement est dédiée dès sa fabrication au paiement à une entité unique, le médiateur.

Outre la simplicité du système de contrôle du rejeu et l'impossibilité du vol, les coûts unitaires de fabrication et de vérification du jeton d'une part (liés au temps de calcul), de transmission et de conservation de ce même jeton d'autre part (liés à l'espace qu'il occupe) sont très inférieurs à ceux de la pièce électronique.

**b) appoint :**

Cet avantage est directement lié au précédent. Comme il a été expliqué, la possibilité de diminuer la valeur faciale des pièces -et ici des jetons-, voire de leur donner à toutes la valeur correspondant à la granularité que l'on a définie pour le système de paiement, est directement liée à leur coût unitaire de fabrication et d'utilisation.

**c) rejeu :**

Comme toute information, le jeton de paiement ne se donne pas réellement mais se partage, et il peut donc être frauduleusement réutilisé (ou "rejoué"), aussi bien par l'utilisateur lors du paiement (rejeu utilisateur), que par le médiateur lors du dépôt chez l'émetteur (rejeu du médiateur). Un système de paiement par pièces électroniques doit donc obligatoirement comporter un dispositif -généralement contraignant- de contrôle du non-rejeu.

Comme il a été expliqué, l'organisation du système de paiement selon l'invention permet de s'affranchir dans une large mesure de cette contrainte. Le contrôle du rejeu utilisateur est effectué localement (il ne nécessite pas de connexion supplémentaire à un système centralisé), au moyen d'une recherche restreinte et immédiatement (pas de vérification a posteriori, suivie d'une sanction éventuelle) par le médiateur, qui est le seul habilité à recevoir les jetons de paiement des utilisateurs.

### d) interception en ligne et vol :

Le retrait de la garantie de prépaiement peut être effectué de façon telle que l'utilisateur crée lui-même ses jetons de paiement et ne les communique à personne. L'utilisateur est ainsi protégé contre le vol de ses jetons de paiement lors du retrait, même par leur futur destinataire légitime, le médiateur.

L'interception d'éléments de garantie de prépaiement par un tiers lors du paiement n'a pas de conséquences fâcheuses sous réserve que l'origine de la commande soit authentifiée, car l'émetteur ne remboursera la garantie de prépaiement associée qu'à son destinataire légitime, le médiateur.

### A5) L'opération de retrait

L'utilisateur acquiert, lors du retrait, la garantie de prépaiement auprès de l'émetteur. Elle est constituée des chaînes de jetons de paiement $w_{i,j}$ et de la signature de l'émetteur SE. En échange, l'émetteur bloque ou prélève la valeur des jetons de paiement sur un compte de l'utilisateur, appelé dans la suite compte porte-monnaie virtuel ou, en abrégé, compte P.M.V. de l'utilisateur. Ce compte n'est pas nécessairement spécialisé et est alimenté par une autre voie, non décrite.

Le retrait s'effectue en deux phases : une phase (a) de constitution des chaînes de jetons de paiement, suivie d'une phase (b) de validation de ces chaînes. Le retrait est décrit ici dans le cas d'une pièce comportant une chaîne unique de jetons, de valeurs égales.

### a) Constitution des chaînes :

L'utilisateur et l'émetteur négocient, puis déterminent la longueur N de la chaîne de jetons et la date d'expiration d de cette chaîne. L'utilisateur choisit et garde secrète la valeur t de la tête de la chaîne (l'indice i de la chaîne est omis pour simplifier). Puis, il calcule la valeur $r=h^N(t)$, appelée racine de la chaîne, en appliquant N fois la fonction h qui est une fonction à sens unique publique.

Les N jetons de paiement, dans l'ordre où ils seront dépensés, sont les $w_j=h^{N-j}(t)$, avec $1{\leq}j{\leq}N$. On peut noter ici que la racine r n'est pas un jeton : le premier jeton $w_1$ de la chaîne vérifie h(w=r.

### b) Validation de la chaîne :

L'utilisateur envoie à l'émetteur la racine r, ainsi que celles des valeurs (date d'expiration et longueur de la chaîne) d et N qui sont inconnues de ce dernier. L'émetteur doit pouvoir s'assurer de l'origine de cet envoi. Selon la degré de sécurité choisi, cette contrainte peut donner lieu à une authentification préalable de l'utilisateur, à une authentification de l'origine du message, à une signature de l'utilisateur, éventuellement interactive.

Si l'émetteur s'engage préalablement à n'autoriser un retrait de cet utilisateur qu'en échange d'une signature de ce dernier, il peut en outre octroyer le droit à cet utilisateur de contester la validité d'un retrait sur son compte.

L'émetteur réalise une signature contenant au moins les valeurs d, N, r, et facultativement l'identifiant du médiateur $id_M$, celui de l'utilisateur $id_U$, prélève ou bloque le montant correspondant à la valeur de la chaîne de jetons, et retourne cette signature à l'utilisateur, et éventuellement au médiateur.

Dans une variante avec anonymat, la signature de l'émetteur précédemment décrite peut être effectuée en aveugle, selon le principe de la "signature aveugle" avec ou sans trappe), afin d'assurer l'indépendance du retrait de cette chaîne, d'une part, et de l'ensemble des paiements réalisés à l'aide de cette chaîne, d'autre part. Cette indépendance est une forme d'intraçabilité par le biais de laquelle un certain degré d'anonymat des transactions est préservé.

Dans une autre variante, l'émetteur participe au choix des têtes $t_i$ des chaînes de jetons de façon telle qu'il soit certain que l'utilisateur ne peut connaître l'antécédent de $t_i$ par h. Il n'est alors plus nécessaire de faire figurer les longueurs Ni des chaînes dans la signature.

On peut appeler "mécanisme de choix conjoint" le mécanisme permettant cette participation de l'émetteur : il peut ou non conduire l'émetteur à connaître les valeurs $t_i$ choisies (si oui, l'utilisateur n'a plus besoin de les lui transmettre). En revanche, ce mécanisme ne doit pas révéler ces valeurs à un tiers espionnant la ligne : il doit donc également assurer la fonction de transport de secret.

### A6) L'opération de paiement

Préalablement à tout paiement, le médiateur doit prendre connaissance de la signature de l'émetteur validant les jetons ou chaînes de jetons de paiement. Par exemple, cette signature peut être donnée :

- par l'utilisateur au médiateur au cours du dialogue donnant lieu au premier paiement effectué avec cette garantie de prépaiement,

- ou directement par l'émetteur au médiateur. On peut, dans ce cas, envisager un mode de fonctionnement légèrement dégradé, dans lequel l'utilisateur, faisant confiance à la banque, ne reçoit pas la signature validant ses jetons de paiement.

Pour le paiement proprement dit, l'utilisateur, de manière récurrente, à la suite de la n-ième requête de paiement d'un montant de $S_n$ unités monétaires en provenance d'un commerçant, donne en paiement au médiateur au moins un jeton (et un jeton de chaque chaîne au plus), jusqu'à l'obtention du montant désiré.

A chaque fois qu'il reçoit un paiement de l'utilisateur, le médiateur paie le commerçant dont il connaît l'identité, du montant reçu moins sa commission, à l'aide du sous-système de postpaiement.

L'utilisateur peut éventuellement posséder, au même moment, plusieurs garanties de prépaiement en cours de validité et les utiliser pour un même prépaiement.

**A7) L'opération de dépôt**

Au plus tôt, et en tout cas sans qu'il soit besoin d'attendre l'épuisement des chaînes de jetons de la garantie de prépaiement, le médiateur remet à l'émetteur, pour chaque utilisateur ayant utilisé le système de paiement depuis le dernier dépôt, le dernier jeton consommé de chaque chaîne.

Contrairement au cas de la pièce électronique classique, la garantie de prépaiement à chaînes de jetons demeure donc valide en paiement -c'est-à-dire les jetons non utilisés de la chaîne peuvent être cédés en paiement- après que le destinataire du paiement, en l'occurrence le médiateur, a remis à l'émetteur tout ou partie des jetons reçus. Elle cesse d'être valide lorsque toutes les chaînes sont épuisées, ou si elle expire, ou encore, si elle est remboursée.

**A8) L'opération de remboursement**

Le système à chaînes de jetons peut faire l'objet d'un remboursement exceptionnel à l'utilisateur, soit de sa valeur totale, si elle n'a pas été du tout utilisée, soit du montant des jetons non utilisés en paiement. Le remboursement peut intervenir sur demande de l'utilisateur, ou être déclenché par un autre événement (par exemple, l'expiration de la chaîne, ou le retrait d'une nouvelle chaîne), auquel cas il est dit automatique.

Si cette chaîne de jetons a été retirée en aveugle, le remboursement ne peut se faire que sur demande de l'utilisateur, qui doit alors fournir la preuve qu'il est bien l'auteur du retrait de cette chaîne.

On peut noter que le remboursement dont il est question ici est le remboursement exceptionnel à l'utilisateur et non le remboursement normal au commerçant après le dépôt.

Si un remboursement à l'utilisateur a lieu avant la date d'expiration de la garantie de prépaiement, cette dernière est dite "révoquée" par l'émetteur.

Lorsque la demande de remboursement d'un utilisateur est acceptée, l'émetteur fixe une date de révocation ($d_{rev.ut.}$) de la garantie de prépaiement considérée et la transmet à l'utilisateur. Cette date de révocation peut être considérée comme une date d'expiration anticipée : en deçà de cette date, l'utilisateur peut revenir sur sa décision et utiliser sa garantie de prépaiement ; au-delà, elle sera refusée par le médiateur. On peut noter là encore que le médiateur dispose d'un délai supplémentaire pour effectuer le dépôt :

$$d_{rev.méd.} > d_{rev.ut.} + \Delta_{dépôt}.$$

L'intervalle de temps entre la demande de remboursement et la révocation tient compte du délai de publication de la nouvelle liste des garanties de prépaiement révoquées :

$$d_{rév.ut.} > d_{dde\ remb.} + \Delta_{pub}.$$

Le remboursement effectif sur le compte de l'utilisateur ne doit intervenir qu'au-delà de la date de révocation.

**B) LE SOUS-SYSTEME DE POSTPAIEMENT**

Le sous-système de postpaiement va maintenant être décrit. Ce sous-système pourrait convenir également comme sous-système de paiement de l'utilisateur au médiateur. Les solutions décrites pour le sous-système de postpaiement peuvent convenir plus généralement comme système de postpaiement dédié au paiement à une entité unique.

**B1) La garantie de postpaiement utilisée :**

Le commerçant reçoit, en paiement, une garantie de postpaiement composée de deux sortes d'éléments de garantie de postpaiement : la signature du médiateur, et les jetons de preuve.
Les chaînes de jetons de preuve se construisent exactement de la même façon que les chaînes de jetons de paiement. Elles sont néanmoins de longueurs plus grandes, car elles doivent permettre le paiement de tous les utilisateurs clients d'un commerçant. Par exemple, sur une longue période, si un médiateur met en relation $N_U$ utilisateurs et $N_F$ commerçants, et en supposant que tous les jetons produits sont utilisés, et qu'ils ont tous la même valeur, on a :

$$L_F = (N_U/N_F) L_U$$

où $L_U$ et $L_F$ sont les longueurs moyennes des chaînes de jetons de paiement et de jetons de preuve, respectivement.
La signature du médiateur doit contenir au minimum l'identifiant du commerçant bénéficiaire du paiement, ainsi que les racines des chaînes de jetons de preuve. Il n'est pas nécessaire d'y faire figurer la longueur des chaînes.

**B2) Le paiement**

Préalablement à tout paiement utilisant cette garantie de postpaiement, le médiateur envoie au commerçant la signature qu'il a produite. Cet envoi peut être effectué au cours de la session donnant lieu au premier paiement utilisant cette garantie de postpaiement.
Conformément à l'organisation du système, le médiateur, après réception du paiement de l'utilisateur, envoie en paiement un ou plusieurs jetons de preuve au commerçant. Comme il sera expliqué, lorsque le médiateur joue le rôle de courtier, le paiement de l'utilisateur peut être anticipé. Conformément à la définition du système de postpaiement, la garantie de postpaiement donne lieu à un paiement effectif au commerçant, qui peut être effectué par exemple selon les divers modes déjà explicités.

**C) LES SESSIONS MULTIPLES**

**C1) Sessions d'utilisateur multiples :**

Un utilisateur peut souhaiter ouvrir parallèlement plusieurs sessions de paiement avec des commerçants éventuellement différents, en utilisant un porte-monnaie unique. Pour rendre cela possible, il suffit que le médiateur gère l'exclusion mutuelle des accès aux données associées à ce porte-monnaie, et en particulier l'accès en lecture/écriture au dernier jeton de paiement reçu de l'utilisateur, pour chaque chaîne de jeton de paiement. Ainsi, les données conservées par le médiateur resteront cohérentes, et l'utilisateur ne pourra pas rejouer, même involontairement, les mêmes jetons au cours des sessions différentes.

**C2) Sessions de commerçant multiples :**

Lorsqu'un commerçant a ouvert plusieurs sessions avec des utilisateurs différents (éventuellement pour un service unique multi-utilisateurs), le médiateur peut avoir à gérer les paiements de plusieurs utilisateurs en direction du même commerçant. Il peut, pour ce faire, engager les actions non mutuellement exclusives suivantes :

- agréger des paiements à ce commerçant en un seul paiement, à condition toutefois de préciser la décomposition de ce paiement unique et de l'authentifier,

- gérer l'exclusion mutuelle des accès aux données associées à ce commerçant et, en particulier, l'accès en lecture/écriture au dernier jeton de preuve octroyé à ce commerçant, pour chaque chaîne de jetons de preuve,

- gérer plusieurs chaînes de jetons de preuve, et répartir les utilisateurs sur les différentes chaînes,

- gérer plusieurs sous-systèmes de postpaiement au même commerçant et repartir les utilisateurs sur les différents sous-systèmes.

## D) LA LIVRAISON ET COURTAGE

Les opérations de livraison et de courtage vont maintenant être décrites :

### D1) Modes de livraison :

Dans le système de paiement tel qu'il a été décrit, la livraison du bien peut intervenir à tout moment. En fait, le système est conçu de telle façon que le commerçant peut se permettre d'attendre de recevoir la garantie de paiement, avant de livrer. Ceci suppose cependant que le commerçant soit digne de confiance et livre effectivement après avoir reçu cette garantie. Cette solution est par exemple applicable pour le paiement de prestations à la durée : l'utilisateur paie par tranches de temps, et peut se rendre compte, en temps réel, de la fourniture de la prestation et interrompre le paiement le cas échéant. Si l'on préfère que la livraison soit garantie par le médiateur, on peut s'arranger pour que la livraison transite par lui. Dans ce cas, il ne cédera la garantie de paiement au commerçant qu'une fois le bien reçu du commerçant .

### D2) Courtage et livraison différée :

Si des facteurs autres que le paiement sont susceptibles de ralentir la livraison (éloignement, affluence, ...), l'utilisateur peut souhaiter ne pas attendre et être livré en différé. Le médiateur prend alors en charge la requête de l'utilisateur après paiement de ce dernier et la transmet au commerçant en différé : la requête et le paiement de l'utilisateur au médiateur, d'une part, le paiement du médiateur au commerçant et la livraison, d'autre part, ne sont plus effectués simultanément.

### Brève description des dessins

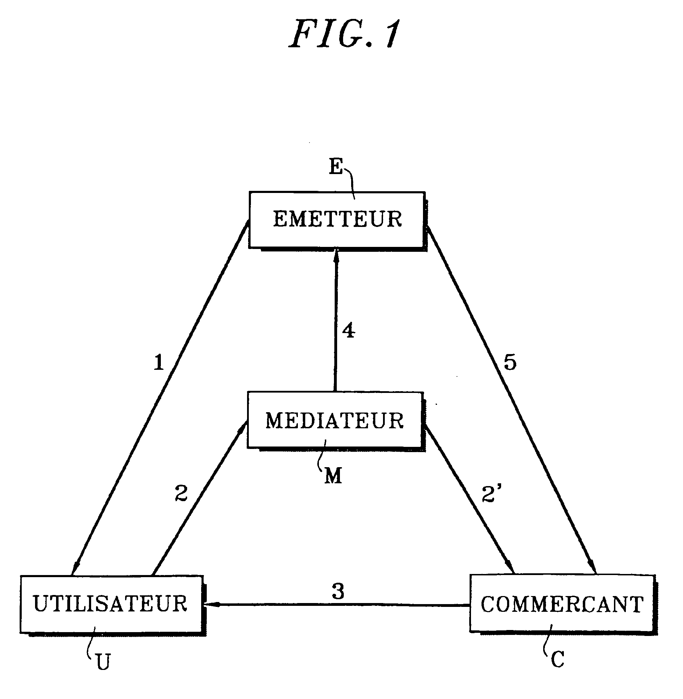

- la figure 1, unique, représente l'organisation générale du système de l'invention.

### Exposé détaillé de modes de réalisation

### A) Organisation du système de paiement

Comme illustré sur la figure 1, le système comporte quatre acteurs principaux : l'utilisateur (U), le commerçant (C), le gestionnaire de porte-monnaie virtuel, c'est-à-dire la communauté bancaire (banque) appelée encore émetteur (E), et enfin l'opérateur, qui joue le rôle de médiateur (M) dans la transaction. La chronologie des échanges est représentée sur la figure 1.
Les références des échanges ont la signification suivante :

1 : retrait des jetons de paiement par l'utilisateur U auprès de l'émetteur E,
2 : paiement (flux de jetons de paiement) de l'utilisateur U au médiateur M,
2' : paiement (flux de jetons de preuve) du médiateur M au commerçant C,
3 : livraison du commerçant C à l'utilisateur U,
4 : dépôt des jetons accumulés (fin de journée) par le médiateur M auprès de l'émetteur E,
5 : envoi du relevé de compte (fin de mois au moins) par le commerçant C à l'émetteur E.

### A1) Flux financiers :

L'utilisateur ne paie pas directement les prestations au commerçant, mais à un intermédiaire, appelé "médiateur". Le médiateur, quant à lui, s'engage, aussitôt le paiement réalisé, à reverser au commerçant les sommes reçues, moins sa commission. Sur réception de cet engagement, le commerçant livre le produit acheté à l'utilisateur. Le paiement de l'utilisateur au médiateur prend la forme d'un système porte-monnaie virtuel à jetons de paiement, mais la spécialisation de ces jetons au paiement à une entité unique simplifie considérablement leur mise en oeuvre. L'engagement du médiateur à reverser au commerçant les sommes qui lui sont dues prend la forme de jetons de preuve. Ces jetons ne seront utilisés comme preuve par le commerçant qu'en cas de conflit avec le médiateur, et ne constituent pas réellement un flux financier.

**A2) Flux de jetons :**

Le flux d'informations de paiement (branches 2 et 2', sur la figure 1) passe par le médiateur M qui réalise une substitution de jetons : pour un jeton de paiement reçu de l'utilisateur U, il donne un jeton de preuve au commerçant C. Les jetons de paiement circulent dans le triangle 1-2-4 et s'apparentent donc à des pièces électroniques classiques (retrait, paiement, dépôt). Les jetons de preuve, eux, ne parcourent que la branche 2'.

**A3) Comptes porte-monnaie virtuel (PMV) :**

On ne s'intéresse pas ici à l'organisation interne du gestionnaire de porte-monnaie virtuel (l'émetteur). On considère qu'il gère un compte pour chaque utilisateur (appelé compte PMV de l'utilisateur), distinct ou non de son compte bancaire, et qui est alimenté par un moyen extérieur. Le gestionnaire de porte-monnaie virtuel gère également un compte pour le médiateur (appelé compte PMV du médiateur) et un compte pour chaque commerçant (appelé compte PMV du commerçant).

Le compte PMV d'un utilisateur sert à renflouer son porte-monnaie virtuel, pendant l'opération de retrait (ou encore rechargement du PMV). L'argent contenu dans le porte-monnaie virtuel lui-même est constitué de l'information détenue par l'utilisateur, à savoir, la chaîne de jetons de paiement validée par l'émetteur.

**A4) Jetons de paiement :**

Les jetons de paiement de l'utilisateur constituent le contenu de son porte-monnaie virtuel (PMV). L'utilisateur recharge son porte-monnaie virtuel (autrement dit, valide ses jetons de paiement) lors de l'opération de retrait sur son compte PMV (branche 1, de l'émetteur vers l'utilisateur). Puis les jetons de paiement sont cédés au médiateur lors de l'acte de paiement (branche 2, de l'utilisateur vers le médiateur). Enfin, ils sont remis à l'émetteur, lors de l'opération de dépôt (branche 4, du médiateur vers l'émetteur).

Ce flux de jetons de paiement s'apparente donc à un flux de pièces électroniques. Cependant, le fait que le médiateur soit un point de passage obligé de ces jetons, et qu'ils soient compensables sur un compte unique (le compte PMV du médiateur) résout à la fois le problème du rejeu utilisateur et le problème du vol des jetons comme expliqué plus haut.

**A5) Jetons de preuve :**

Le second flux de jetons circule du médiateur vers le commerçant et constitue, pour ce dernier, une garantie de reversement par le médiateur. Le commerçant, après avoir émis une requête de paiement en direction de l'utilisateur, éventuellement par l'intermédiaire du médiateur, s'attend à recevoir de ce dernier les jetons de preuve correspondants avant de livrer l'information.

Ils ne sont exhibés par le commerçant qu'en cas de litige avec le médiateur lorsque le total des reversements effectués par ce dernier ne correspond pas au nombre de jetons reçus du médiateur. Les jetons de preuve sont en réalité regroupés en chaînes de jetons de preuve. Une chaîne de jetons de preuve peut être considérée comme une signature à message variable, qui n'a valeur de signature qu'accompagnée du dernier jeton reçu (qui constitue la partie variable du message. Dans le cas de l'invention, il s'agit du montant que le médiateur s'engage à payer au commerçant.).

**B) Le retrait :**

**B1) Constitution et validation de la chaîne de jetons**

Entre l'émetteur E et l'utilisateur U s'établissent une négociation et un accord sur :

- le nombre N de jetons de paiement à retirer,
- la date d'expiration de la chaîne de jetons soit $d_{exp}$.

L'utilisateur calcule les jetons par l'opération :

$$w_i = h^{N-i}(t)$$

$$r = w_0$$

L'utilisateur U envoie ensuite à l'émetteur : $S_U(id_E, r, N,$ date du jour$)$.

Puis, l'émetteur :

- bloque un montant de N unités sur le compte de l'utilisateur U,
  ou bien :

- retire ce montant sur le compte de U,
- détermine la date d'émission $d_{emi}$. Et la date d'expiration $d_{e/e}$,
- conserve $id_U, r, N, d_{e/e}, S_U$.

L'émetteur envoie ensuite à l'utilisateur :
$S_\varepsilon(id_U, r, N, d_{e/e})$.
L'utilisateur U retransmettra $S_E$ au médiateur M lors du premier paiement effectué avec cette chaîne.

**B2) Gestion bancaire des chaînes de jetons de paiement**

Le retrait des jetons de paiement est autorisé tous les jours. Le fonctionnement pour l'utilisateur est donc souple, mais cette disposition permet surtout à l'émetteur d'étaler dans le temps la gestion des retraits et des mises en service de chaînes de jetons de paiement associées.
Le retrait peut donner lieu, par ordre de sécurité croissante :

- soit à une authentification faible (par mot de passe) de l'utilisateur par l'émetteur,
- soit à une authentification "semi-forte" grâce à une chaîne de mots de passe à usage unique,
- soit à une authentification forte, utilisant un protocole d'authentification (défi/réponse),
- soit à une signature (active), qui permet à l'émetteur de conserver une trace de retrait, et, corrélativement, donne le droit à l'utilisateur de contester la validité d'un retrait sur son compte.

La période de validité de la chaîne commence le jour du retrait. La durée de validité doit être choisie également dans le but d'étaler dans le temps la gestion des mises hors service des chaînes de jetons de paiement au bout de la période de validité. Par exemple, la durée peut être égale à n fois $\delta$, où $\delta$ est la période de validité minimum, et n entier choisi par l'utilisateur, ou encore, n=1 pour tous les utilisateurs.
Pendant la durée de validité d'une chaîne, l'émetteur conserve, en permanence, pour chaque utilisateur :

- la racine r de la chaîne de jetons de paiement actuellement en service,
- la longueur N de la chaîne, c'est-à-dire le nombre total de jetons de la chaîne,
- le dernier jeton dépensé la veille (avant dépôt) ou le jour même (après dépôt),
- le nombre de jetons déjà dépensés (i) ou non dépensés (N-i).

Au bout de la période de validité, la chaîne devient inutilisable en paiement. L'émetteur met la chaîne de l'utilisateur hors service, et rembourse à l'utilisateur, sur son compte porte-monnaie virtuel, la valeur des jetons non dépensés, sans que l'utilisateur ait à se manifester.
Si l'utilisateur se manifeste avant la fin de la période de validité de sa chaîne de jetons de paiement, en vue de retirer de nouveaux jetons, il reçoit une nouvelle chaîne (plus longue). Sa demande (éventuellement signée) invalide automatiquement la chaîne précédente, de sorte qu'à chaque instant, une chaîne et une seule est en service pour un utilisateur donné.

**C) Paiement par double flux de jetons**

Dans l'exemple qui va suivre, l'utilisateur U paie p jetons au commerçant C, avec une nouvelle chaîne qu'il vient de retirer, puis il se connecte à un autre commerçant C' et paie p' jetons avec la même chaîne. Les p jetons payés à C, ainsi que les p' jetons payés à C', peuvent en réalité avoir été cédés en plusieurs fois. On note i l'indice du jeton courant de la chaîne de U, et j(resp.j') l'indice du jeton courant octroyé par M à C (resp. C').
Dans une première phase d'initialisation (i=0) d'une nouvelle chaîne, l'utilisateur U transmet au médiateur M la signature SE.

Le médiateur vérifie si $S_E(id_U,r,N,d_{e/e})$ est valide. Il conserve $id_U$, r, N, $d_{e/e}$, $S_E$ et initialise i à 0 .

Dans une deuxième phase, on réalise le paiement de p jetons à C. Pour cela U transmet au médiateur $id_{c'}$, $w_{i+p}$. Le médiateur calcule $h^p(w_p)$ et vérifie que le résultat est r. Le médiateur retrouve j de C et transmet au commerçant $id_{U,w'j+p}$. Le commerçant vérifie que $h^p(w'_{j+p})=w'_j$. Le médiateur fixe i=p et j=j+p et conserve $(i,w_i)$ et j. Le commerçant calcule j=j+p et conserve $(j,w'_j)$.

Dans une troisième phase, on réalise le paiement de p' jetons à C' par des opérations analogues. L' utilisateur transmet au médiateur $id_{C'}$, $w_{i+p'}$. Le médiateur vérifie que $h^{p'}(w_{i+p'})$ et vérifie que le résultat est $w_i$. Le médiateur retrouve j' de C' et transmet au commerçant $id_U$, $w''_{j'+p'}$. Le commerçant vérifie que $h^{p'}(w''_{j'+p'})=w''_{j'}$. Le médiateur fixe i=i+p', j'=j'+p' et conserve $(i,w_i)$ et j'. Le commerçant c' calcule j'=j'+p' et conserve $(j',w''_{j'})$.

On n'a pas mentionné, dans ces opérations, l'octroi par M à C (resp. C') d'une signature (de M) sur la racine r' de la chaîne w' (resp. r" de w"), car on suppose que l'on se trouve en "milieu de chaîne",, et que cela a eu donc lieu lors d'un paiement précédent.

## D) Dépôt des jetons de paiement

En fin de journée, le médiateur M remet à l'émetteur E les jetons cédés par les utilisateurs U, qui se sont connectés le jour même. En réalité, il suffit de remettre le dernier jeton reçu de chaque utilisateur, car les jetons précédents s'en déduisent, grâce à la structure chaînée. Il converse la valeur de ce dernier jeton reçu, ainsi que la signature $S_E$ $(id_U,N,r)$, en prévision des paiements ultérieurs de l'utilisateur, dont la chaîne de jetons de paiement reste évidemment valide.

On note :

| | |
|---|---|
| numéro du jour d'aujourd'hui : | n |
| indice du dernier jeton consommé par U : | $i_U(n)$ |
| dernier jeton consommé par U : | $w_{1u}(n)$ |
| nombre de jetons consommés ce jour par U : | $N_U(n)=i_u(n)-i_u(n-1)$ |
| indice du dernier jeton octroyé à C par M : | $j_c(n)$ |
| nombre de jetons octroyés aujourd'hui à C : | $N_C(n)=j_C(n)-j_C(n-1)$ |

Dans la phase de dépôt des jetons, le médiateur, pour un utilisateur s'étant connecté ce jour n, retrouve $w_{1U(n)}$, $N_U(n)$ puis envoie à l'émetteur, $N_U(n),w_{iU(n)}$. L'émetteur calcule $h^{N_U(n)}(w_{iu(n)})$ et vérifie que le résultat donne $w_{iU(n-1)}$. L'émetteur verse la somme de $N_U(n)$ unités sur le compte PMV de M puis adresse un acquittement au médiateur.

Dans la phase de transfert de fonds, le médiateur retrouve $N_C(n)$, calcule sa commission, notée c(C,n) ; le médiateur vire ensuite $N_C(n)-c(C,n)$ au commerçant. L'émetteur prélève $N_C(n)-c(C,n)$ sur le compte de M et verse la somme sur le compte de C.

L'émetteur verse alors sur le compte du médiateur la somme correspondant au total des jetons reçus des différents utilisateurs. Puis, le médiateur envoie à l'émetteur un ordre de transfert de fonds de son compte vers les comptes des différents commerçants. La somme versée à chaque commerçant correspond à la somme payée par les utilisateurs qui se sont connectés à ce commerçant, moins la commission retenue par le médiateur.

Contrairement aux chaînes de jetons de paiement qui ont des périodes de validité "glissantes" (la période de validité commence le jour choisi pour le retrait par l'utilisateur), les chaînes de jetons de preuve ont des périodes de validité fixes (identiques pour tous les commerçants, par exemple, un mois du calendrier).

Le médiateur construit, pour chaque commerçant, une chaîne de jetons de preuve valable pour une période fixe, et la signe. Il envoie la signature au commerçant concerné, et lui cédera progressivement les jetons associés à cette chaîne, au fur et à mesure des paiements effectués par les différents utilisateurs de ce commerçant. Chacun de ces jetons de preuve représente un engagement du médiateur de verser, en fin de mois au plus tard, la valeur de un jeton sur le compte du commerçant.

Il est souhaitable pour le commerçant que le médiateur lui verse chaque soir une somme correspondant à son gain du jour. Cependant, la preuve que lui donne le médiateur cumule les gains journaliers du commerçant et ne concerne donc que le total de ses gains sur le mois. Pour satisfaire totalement le commerçant, c'est-à-dire lui permettre d'engager un contentieux si les versements du médiateur sont tardifs, on peut demander au médiateur de vérifier, lors de toute connexion à un commerçant, si son dernier versement à ce commerçant remonte à plus de 24 heures, et, si c'est le cas, de lui fournir un engagement signé de lui verser son dû le soir même.

En fin de mois, le commerçant reçoit un relevé bancaire, sur lequel sont indiqués les versements effectués par le médiateur. Il peut comparer le total qui lui a été versé, à la valeur totale des jetons qu'il a reçus du médiateur, et dispose d'un délai pour contester si les deux montants diffèrent, en exhibant la preuve que constituent les jetons de preuve reçus lorsqu'ils sont associés à la signature de la chaîne.

Si une chaîne de jetons de preuve est épuisée, une nouvelle chaîne est construite par le médiateur (dont la longueur est évaluée en fonction de la durée restante dans le mois en cours, et du chiffre d'affaires mensuel du commerçant concerné).

**Revendications**

1. Système de paiement électronique utilisant des premiers supports détenus par des utilisateurs (U) et des deuxièmes supports détenus par des commerçants (C), et un troisième support détenu par un médiateur (M) **caractérisé par le fait qu'**il est constitué :

   - d'un premier sous-système de paiement utilisant les supports des utilisateurs (U), ces derniers comprenant des garanties de paiement comprenant des éléments de garantie de paiement sous forme de chaînes de jetons électroniques de paiement ($W_{ij}$) et des moyens pour transmettre au support du médiateur un ou plusieurs éléments de garantie de paiement, et le support du médiateur (M),
   - d'un second sous-système de paiement utilisant le support du médiateur (M) et le support de l'un des commerçants (C),

   chaque premier ou second sous-système de paiement pouvant être soit un système de prépaiement, soit un système de postpaiement.

2. Système selon la revendication 1, dans lequel chaque support d'utilisateur comprend également une signature SE provenant d'un émetteur et validant les éléments de garantie de paiement.

3. Système selon la revendication 1, dans lequel chaque chaîne (Ci) de jetons de prépaiement $w_{i,j}$ comprend Ni jetons, où Ni est la longueur de la chaîne, ces Ni jetons étant repérés par le rang j qu'ils occupent dans la chaîne, chaque jeton de rang j ($w_{i,j}$) étant lié au jeton de rang suivant $w_{i,j+1}$ par la relation :

$$w_{i,j} = h(w_{i,j+1}),$$

où h est une fonction à sens unique publique, ri tel que $r_i = h(w_{i,1})$ étant désigné par la racine $r_i$ de la chaîne et le jeton de rang Ni ($w_i,N_i$) par la tête $t_i$ de la chaîne.

4. Système selon la revendication 2, dans lequel la signature de l'émetteur (SE) contient les racines ri de chaque chaîne.

5. Système selon la revendication 3, dans lequel la signature de l'émetteur contient en outre un ou plusieurs éléments, notamment $id_M, id_U, N_i, d_{exp.ut.}$.

6. Système selon la revendication 3, dans lequel un support d'un utilisateur comprend uniquement la tête $t_i = w_i, n_i$ de chaque chaîne et des moyens de calcul de proche en proche de tous les jetons de la chaîne à l'aide de la fonction h jusqu'à la racine $w_{i,1}$ obtenue en appliquant N fois la fonction h.

7. Système selon la revendication 3, dans lequel le support d' un utilisateur comprend la tête $t_i = w_{i,Ni}$ de chaque chaîne et des jetons intermédiaires entre la tête $t_i$ et la racine $r_i = h(w_{i,1})$.

8. Système selon la revendication 3, dans lequel le support d'un utilisateur contient la totalité des jetons de toutes les chaînes.

9. Système selon la revendication 3, dans lequel les moyens du support d'un utilisateur aptes à adresser au support du médiateur des jetons de paiement sont aptes à adresser un jeton de chaque chaîne au plus, la tête $t_i$ de chaque chaîne étant le dernier jeton de la chaîne à pouvoir être adressé.

10. Système selon la revendication 1, dans lequel le support du médiateur est apte à recevoir et à conserver la signature de l'émetteur SE directement de l'émetteur.

11. Système selon la revendication 1, dans lequel le support du médiateur comprend des garanties de postpaiement sous forme de chaînes de jetons de postpaiement et d'une signature du médiateur.

**12.** Système selon la revendication 11, dans lequel chaque chaîne de jetons de postpaiement comprend Mi jetons, où Mi est la longueur de la chaîne, ces Mi jetons étant repérés par le rang j qu'ils occupent dans la chaîne, chaque jeton de rang j ($w_{i,j}$) étant lié au jeton de rang suivant $w_{i,j+1}$ par la relation :

$$w_{i,j} = h(w_{i,j+1}),$$

où h est une fonction à sens unique publique, le jeton $r_i = w_{1,o}$ de rang 1 constituant la racine de la chaîne.

**13.** Système selon la revendication 12, dans lequel le support du médiateur (M) est apte à adresser au support d'un commerçant (C) au moins un jeton de postpaiement.

**14.** Procédé de paiement électronique entre des utilisateurs (U) et des commerçants (C) pour la mise en oeuvre du système selon la revendication 1, **caractérisé par le fait que** la transaction s'effectue d'abord sous forme de prépaiement entre le support d'un utilisateur (U) et le support du médiateur (M), la support de l'utilisateur comprenant des garanties de paiement sous forme de chaînes de jetons de paiement $w_{ij}$, puis sous forme de postpaiement entre le support du médiateur (M) et le support de l'un des commerçants (C).

**15.** Procédé selon la revendication 14, dans lequel le médiateur (M) reçoit d'un utilisateur (U) des éléments de garantie de prépaiement sous forme à la fois de jetons de prépaiement pris dans les chaînes de jetons de paiement $w_{i,j}$ et d'une signature SE validant les jetons et dans lequel le médiateur (M) donne un ou plusieurs éléments de garantie de paiement à un commerçant (C) sous forme de jetons de postpaiement pris dans des chaînes de jetons de postpaiement.

**16.** Procédé selon la revendication 15, dans lequel chaque chaîne Ci de jetons de prépaiement comprend Ni jetons, où Ni est la longueur de la chaîne, ces Ni jetons étant repérés par le rang j qu'ils occupent dans la chaîne, chaque jeton de rang j ($w_{i,j}$) étant lié au jeton de rang suivant $w_{i,j+1}$ par la relation :

$$w_{i,j} = h(w_{i,j+1}),$$

où h est une fonction à sens unique publique, $S_i$ (tel que $r_i = h(w_{i,j})$ étant désigné par "la racine" $r_i$ de la chaîne.

**17.** Procédé selon la revendication 16, dans lequel, à chaque jeton $w_{i,j}$, on associe une valeur faciale vf ($w_{ij}$), qui peut dépendre à la fois du rang i de la chaîne et de son rang j dans la chaîne.

**18.** Procédé selon la revendication 17, dans lequel on associe la même valeur faciale à tous les jetons à l'intérieur d'une même chaîne.

**19.** Procédé selon la revendication 17, dans lequel on associe la même valeur faciale à tous les jetons quels que soient la chaîne et leur rang dans la chaîne.

**20.** Procédé selon la revendication 15, dans lequel la signature SE de l'émetteur (E) contient notamment l'identifiant $id_M$ du médiateur (M).

**21.** Procédé selon la revendication 15, dans lequel la signature SE émise par l'émetteur (E) contient notamment l'iden-tifiant $id_u$ de l'utilisateur (U) .

**22.** Procédé selon la revendication 15, dans lequel la signature SE de l'émetteur (E) contient les racines $r_i$ de chaque chaîne Ci, la longueur Ni de la chaîne Ci, et la date d'expiration de la garantie de prépaiement $d_{exp.ut}$.

**23.** Procédé selon la revendication 14, dans lequel un commerçant (C) reçoit du médiateur (M) des éléments de garantie de postpaiement constitués par une signature du médiateur et des jetons electroniques de preuve.

24. Procédé selon la revendication 23, dans lequel les jetons sont organisés en chaînes et se déduisent les uns des autres par une relation récurrente $w_{i,j}=h(w_{i,j+1})$ où h est une fonction à sens unique publique, $w_{i,0}$ constituant la racine de la chaîne.

25. Procédé selon la revendication 23, dans lequel la signature du médiateur contient l'identité du commerçant bénéficiaire du paiement ainsi que les racines des chaînes de jetons électroniques de preuve.

26. Procédé selon la revendication 15, dans lequel le médiateur. (M) remet à la fin de certaines périodes à l'émetteur (E), les jetons cédés par les utilisateurs (U) qui se sont connectés pendant chaque période.

27. Procédé selon la revendication 26, dans lequel le médiateur (M) remet à l'émetteur (E) le dernier jeton reçu de chaque utilisateur (U).

**Claims**

1. Electronic payment system using first media held by users (U) and second media held by merchants (C), and a third medium held by a mediator (M), **characterized in that** it comprises:

    - a first payment subsystem using the medium of the users (U), the latter including payment guarantees including payment guarantee items in the form of strings of electronic payment tokens ($w_{ij}$) and means for transmitting to the medium of the mediator one or more payment guarantee items, and the medium of the mediator (M),
    - a second payment subsystem using the medium of the mediator (M) and the medium of one of the merchants (C),

    each first or second payment subsystem possibly being either a prepayment system or a postpayment system.

2. System according to Claim 1, in which each user medium also includes a signature SE originating from an issuer and validating the payment guarantee items.

3. System according to Claim 1, in which each string (Ci) of prepayment tokens $w_{i,j}$ comprises Ni tokens, where Ni is the length of the string, these Ni tokens being identified by the rank j that they occupy in the string, each token of rank j ($w_{i,j}$) being linked to the token of next rank $w_{i,j+1}$ by the relation:

$$w_{i,j}=h(w_{i,j+1}),$$

    where h is a public one-way function, ri, such that $r_i=h(w_{i,1})$, being designated by the root $r_i$ of the string and the token of rank Ni ($w_i$, $N_i$) by the head $t_i$ of the string.

4. System according to Claim 2, in which the signature of the issuer (SE) contains the roots ri of each string.

5. System according to Claim 3, in which the signature of the issuer also contains one or more items, in particular $id_M$, $id_U$, $N_i$, $d_{exp.ut}$.

6. System according to Claim 3, in which a medium of a user comprises only the head $t_i=w_{i,Ni}$ of each string and means of computing step by step all the tokens of the string using the function h down to the root $w_{i,1}$ obtained by applying N times the function h.

7. System according to Claim 3, in which the medium of a user comprises the head $t_i=w_{i,Ni}$ of each string and intermediate tokens between the head $t_i$ and the root $r_i = h(w_{i,1})$.

8. System according to Claim 3, in which the medium of a user contains all the tokens of all the strings.

9. System according to Claim 3, in which the means of the medium of a user designed to send to the medium of the mediator payment tokens are designed to send one token of each string at most, the head $t_i$ of each string being the last token of the string to be able to be sent.

10. System according to Claim 1, in which the medium of the mediator is designed to receive and retain the signature of the issuer SE direct from the issuer.

11. System according to Claim 1, in which the medium of the mediator comprises postpayment guarantees in the form of strings of postpayment tokens and a signature of the mediator.

12. System according to Claim 11, in which each string of postpayment tokens comprises Mi tokens, where Mi is the length of the string, these Mi tokens being identified by the rank j that they occupy in the string, each token of rank j ($w_{i,j}$) being linked to the token of next rank $w_{i,j+1}$ by the relation:

$$w_{i,j} = h(w_{i,j+1}),$$

where h is a public one-way function, the token $r_i = w_{i,0}$ of rank 1 forming the root of the string.

13. System according to Claim 12, in which the medium of the mediator (M) is designed to send to the medium of a merchant (C) at least one postpayment token.

14. Method of electronic payment between users (U) and merchants (C) for implementing the system according to Claim 1, **characterized in that** the transaction is first performed in the form of prepayment between the medium of a user (U) and the medium of the mediator (M), the medium of the user including payment guarantees in the form of strings of payment tokens $W_{ij}$, then in the form of postpayment between the medium of the mediator (M) and the medium of one of the merchants (C).

15. Method according to Claim 14, in which the mediator (M) receives from a user (U) prepayment guarantee items in the form both of prepayment tokens taken from the strings of payment tokens $w_{i,j}$ and a signature SE validating the tokens, and in which the mediator (M) gives one or more payment guarantee items to a merchant (C) in the form of postpayment tokens taken from strings of postpayment tokens.

16. Method according to Claim 15, in which each string Ci of prepayment tokens comprises Ni tokens, where Ni is the length of the string, these Ni tokens being identified by the rank j that they occupy in the string, each token of rank j ($w_{i,j}$) being linked to the token of next rank $w_{i,j+1}$ by the relation:

$$w_{i,j} = h(w_{i,j+1}),$$

where h is a public one-way function, $r_i$, such that $r_i = h(w_{i,j})$, being denoted by the root $r_i$ of the string.

17. Method according to Claim 16, in which, each token $w_{ij}$ has associated with it a face value vf ($w_{ij}$) that can depend both on the rank i of the string and its rank j in the string.

18. Method according to Claim 17, in which the same face value is associated with all the tokens within one and the same string.

19. Method according to Claim 17, in which the same face value is associated with all the tokens whatever the string and their rank in the string.

20. Method according to Claim 15, in which the signature SE of the issuer (E) contains in particular the identifier $id_m$ of the mediator (M).

21. Method according to Claim 15, in which the signature SE issued by the issuer (E) contains in particular the identifier $id_u$ of the user (U).

22. Method according to Claim 15, in which the signature SE of the issuer (E) contains the roots $r_i$ of each string Ci, the length Ni of the string Ci, and the expiry date of the prepayment guarantee $d_{exp.ut}$.

**23.** Method according to Claim 14, in which a merchant (C) receives from the mediator (M) postpayment guarantee items comprising a signature of the mediator and electronic proof tokens.

**24.** Method according to Claim 23, in which the tokens are organized in strings and are deduced from each other by a recurrent relation $w_{i,j}=h(w_{i,j+1})$, where h is a public one-way function, $w_{i,0}$ forming the root of the string.

**25.** Method according to Claim 23, in which the signature of the mediator contains the identity of the merchant receiving the payment and the roots of the strings of electronic proof tokens.

**26.** Method according to Claim 15, in which the mediator (M) returns, to the issuer (E), at the end of certain periods, the tokens paid by the users (U) that have connected during each period.

**27.** Method according to Claim 26, in which the mediator (M) returns, to the issuer (E), the last token received from each user (U).

**Patentansprüche**

**1.** Elektronisches Zahlungssystem, das erste, im Besitz der Benutzer (U) befindliche Träger und zweite, im Besitz von Händlern (C) befindliche Träger und einen dritten Träger verwendet, der im Besitz eines Vermittlers (M) ist, **dadurch gekennzeichnet, dass** es besteht aus:

- einem ersten Zahlungs-Untersystem, das die Träger der Benutzer (U) verwendet, wobei letztere Zahlungsgarantien, die Zahlungsgarantieelemente in Form von Ketten von elektronischen Zahlungs-Token ($W_{ij}$) enthalten, und Mittel zur Übertragung von einem oder zwei Zahlungsgarantieelementen an den Träger des Vermittlers aufweisen, und den Träger des Vermittlers (M) verwendet,
- einem zweiten Zahlungs-Untersystem, das den Träger des Vermittlers (M) und den Träger eines der Händler (C) verwendet,

wobei jedes erste oder zweite Zahlungs-Untersystem entweder ein Vorauszahlungssystem oder ein Nachzahlungssystem sein kann.

**2.** System nach Anspruch 1, bei dem jeder Benutzer-Träger ebenfalls eine Signatur SE aufweist, die von einem Aussteller kommt und die Zahlungsgarantieelemente validiert.

**3.** System nach Anspruch 1, bei dem jede Kette (Ci) von Vorauszahlungs-Token $w_{i,j}$ Ni Token enthält, wobei Ni die Länge der Kette ist, wobei diese Ni Token durch den Rang j **gekennzeichnet** sind, den sie in der Kette einnehmen, wobei jedes Token des Rangs j ($w_{i,j}$) mit dem Token des folgenden Rangs $w_{i,j,1}$ durch die folgende Beziehung verbunden ist:

$$w_{i,j} = h(w_{i,j+1})$$

wobei h eine öffentliche Einwegfunktion ist, wobei ri derart, dass $r_i=h(W_{i,1})$, als die Wurzel ri der Kette, und das Token des Rangs Ni ($w_i,N_i$) als der Kopf der Kette bezeichnet wird.

**4.** System nach Anspruch 2, bei dem die Signatur des Ausstellers (SE) die Wurzeln ri jeder Kette enthält.

**5.** System nach Anspruch 3, bei dem die Signatur des Ausstellers außerdem eines oder mehrere Elemente enthält, insbesondere $id_M$, $id_U$, $N_i$, $d_{exp.ut}$.

**6.** System nach Anspruch 3, bei dem ein Träger eines Benutzers nur den Kopf $t_i=w_i$, $N_i$ jeder Kette und Mittel zur schrittweisen Berechnung aller Token der Kette mit Hilfe der Funktion h bis zur Wurzel $w_{i,1}$ aufweist, die durch N-maliges Anwenden der Funktion h erhalten wird.

**7.** System nach Anspruch 3, bei dem der Träger eines Benutzers den Kopf $t_i=w_{i,Ni}$ jeder Kette und Zwischen-Token zwischen dem Kopf $t_i$ und der Wurzel $r_i=h(W_{i,1})$ enthält.

**EP 0 865 010 B1**

8. System nach Anspruch 3, bei dem der Träger eines Benutzers die Gesamtheit der Token aller Ketten enthält.

9. System nach Anspruch 3, bei dem die Mittel des Trägers eines Benutzers, die in der Lage sind, an den Träger des Vermittlers Zahlungs-Token zu übermitteln, in der Lage sind, höchstens ein Token jeder Kette zu übermitteln, wobei der Kopf $t_i$ jeder Kette das letzte Token der Kette ist, das übermittelt werden kann.

10. System nach Anspruch 1, bei dem der Träger des Vermittlers in der Lage ist, die Signatur des Ausstellers SE direkt vom Aussteller zu empfangen und aufzubewahren.

11. System nach Anspruch 1, bei dem der Träger des Vermittlers Nachzahlungsgarantien in Form von Ketten von Nachzahlungs-Token und von einer Signatur des Vermittlers enthält.

12. System nach Anspruch 11, bei dem jede Kette von Nachzahlungs-Token Mi Token enthält, wobei Mi die Länge der Kette ist, wobei diese Mi Token durch den Rang j **gekennzeichnet** sind, den sie in der Kette einnehmen, wobei jedes Token des Rangs j ($w_{i,j}$) mit dem Token des folgenden Rangs $w_{i,j+1}$ durch die folgende Beziehung verbunden ist:

$$w_{i,j} = h(w_{i,j+1})$$

wobei h eine öffentliche Einwegfunktion ist, wobei das Token $r_i = w_{i,0}$ des Rangs 1 die Wurzel der Kette bildet.

13. System nach Anspruch 12, bei dem der Träger des Vermittlers (M) ausgelegt ist, um an den Träger eines Händlers (C) mindestens ein Nachzahlungs-Token zu adressieren.

14. Elektronisches Zahlungsverfahren zwischen Benutzern (U) und Händlern (C) zur Anwendung des Systems nach Anspruch 1, **dadurch gekennzeichnet, dass** die Transaktion zunächst in Form einer Vorauszahlung zwischen dem Träger eines Benutzers (U) und dem Träger des Vermittlers (M), wobei der Träger des Benutzers Zahlungsgarantien in Form von Ketten von Zahlungs-Token $w_{ij}$ enthält, und dann in Form einer Nachzahlung zwischen dem Träger des Vermittlers (M) und dem Träger eines der Händler (C) erfolgt.

15. Verfahren nach Anspruch 14, bei dem der Vermittler (M) von einem Benutzer (U) Vorauszahlungsgarantieelemente in Form sowohl von Vorauszahlungs-Token, die aus den Ketten von Zahlungs-Token $w_{i,j}$ genommen werden, als auch in Form einer Signatur SE empfängt, die die Token validiert, und bei dem der Vermittler (M) eines oder mehrere Zahlungsgarantieelemente an einen Händler (C) in Form von Nachzahlungs-Token gibt, die er aus den Ketten von Nachzahlungs-Token entnimmt.

16. Verfahren nach Anspruch 15, bei dem jede Kette Ci von Vorauszahlungs-Token Ni Token enthält, wobei Ni die Länge der Kette ist, wobei diese Ni Token durch den Rang j **gekennzeichnet** werden, den sie in der Kette einnehmen, wobei jedes Token des Rangs j ($w_{i,j}$) mit dem Token des folgenden Rangs $W_{i,j+1}$ durch die folgende Beziehung verbunden ist:

$$w_{i,j} = h(w_{i,j+1}),$$

wobei h eine öffentliche Einwegfunktion ist, wobei ri derart, dass $r_i = h(w_{i,1})$, als die Wurzel ri der Kette bezeichnet wird.

17. Verfahren nach Anspruch 16, bei dem jedem Token $w_{ij}$ ein Nennwert vf ($w_{ij}$) zugeteilt wird, der sowohl vom Rang i der Kette als auch von seinem Rang j in der Kette abhängen kann.

18. Verfahren nach Anspruch 17, bei dem allen Token innerhalb der gleichen Kette der gleiche Nennwert zugeteilt wird.

19. Verfahren nach Anspruch 17, bei dem allen Token der gleiche Nennwert zugeordnet wird, unabhängig von der Kette und ihrem Rang in der Kette.

20. Verfahren nach Anspruch 15, bei dem die Signatur SE des Ausstellers (E) insbesondere die Kennung $id_M$ des Vermittlers (M) enthält.

**19**

**21.** Verfahren nach Anspruch 15, bei dem die vom Aussteller (E) ausgegebene Signatur SE insbesondere die Kennung $id_U$ des Benutzers (U) enthält.

**22.** Verfahren nach Anspruch 15, bei dem die Signatur SE des Ausstellers (E) die Wurzeln $r_i$ jeder Kette Ci, die Länge Ni der Kette Ci und das Ablaufdatum der Vorauszahlungsgarantie $d_{exp.ut.}$ enthält.

**23.** Verfahren nach Anspruch 14, bei dem ein Händler (C) vom Vermittler (M) Nachzahlungsgarantieelemente erhält, die aus einer Signatur des Vermittlers und aus elektronischen Nachweis-Token bestehen.

**24.** Verfahren nach Anspruch 23, bei dem die Token in Ketten organisiert sind und sich voneinander durch eine sich wiederholende Beziehung $w_{i,j}=h(w_{i,j+1})$ ableiten, in der h eine öffentliche Einwegfunktion ist und $w_{i,0}$ die Wurzel der Kette bildet.

**25.** Verfahren nach Anspruch 23, bei dem die Signatur des Vermittlers die Identität des von der Zahlung profitierenden Händlers sowie die Wurzeln der Ketten von elektronischen Nachweis-Token enthält.

**26.** Verfahren nach Anspruch 15, bei dem der Vermittler (M) am Ende bestimmter Perioden an den Aussteller (E) die Token übergibt, die von den Benutzern (U) abgetreten wurden, die sich während jeder Periode angeschlossen haben.

**27.** Verfahren nach Anspruch 26, bei dem der Vermittler (M) dem Aussteller (E) das letzte von jedem Benutzer (U) empfangene Token übergibt.

# FIG. 1